# EUROPEAN PATENT SPECIFICATION

(11) **EP 2 871 099 B1**
(45) Date of publication and mention of the grant of the patent: **09.05.2018**
(21) Application number: 13191921.9
(22) Date of filing: 07.11.2013
(51) Int. Cl.: B60R 21/06, B60R 21/02

(54) **Cargo protection device and a corner element therefor**
Frachtschutzvorrichtung und Eckelement dafür
Dispositif de protection de marchandises et son élément d'angle

(43) Date of publication of application: 13.05.2015
(73) Proprietor: Volvo Car Corporation, 40531 Göteborg (SE)
(72) Inventor: Svensson, Birger, 42932 Kullavik (SE); Zengin, Fatma, 46331 Lilla Edet (SE); Baho, Tony, 46160 Trollhättan (SE)
(74) Representative: Volvo Car Corporation

(56) References cited:
- EP-A1- 0 995 641
- WO-A1-00/10836
- DE-A1-102010 051 925
- GB-A- 2 206 548
- US-A1- 2009 195 014

## Description

### TECHNICAL FIELD

The present disclosure relates to a corner element for attachment of a cargo protection device to an interior of a vehicle. The disclosure further relates to a cargo protection device comprising a foldable and/or rollable fabric portion and at least one such corner element, a vehicle comprising such a cargo protection device and a method of attaching such a cargo protection device.

### BACKGROUND

It is well known to use a cargo protection device in a vehicle in order to protect the users of the vehicle from cargo being thrown from the luggage compartment onto the users of the vehicle, e.g. when braking the vehicle, or in case of a collision. The cargo protection device may e.g. comprise a net. The upper corners of the cargo protection device are, when in use, attached to a ceiling of the vehicle or to upper side walls, and the lower corners may be attached to the interior of the vehicle.

In order for the cargo protection device to work properly, it is desirable that it covers the open space between the backrests of the seats and the ceiling. Therefore, it is common according to prior art to provide a stiff bar at the upper edge of the cargo protection device in order to retain the upper edge of the cargo protection device taut. However, the stiff bar makes it more difficult to store the cargo protection device, when not in use. Further, the upper edge will follow a straight line, which is not adapted to the shape of the celling of a vehicle, which usually is at least slightly curved. This may result in an interspace between the upper edge of the cargo protection device and the ceiling of the vehicle, through which opening cargo might pass if being thrown forwards.

According to another technical solution of the prior art, the upper edge of the cargo protection device may be provided with an upper edge element like a metal wire or similar element. This solution makes the cargo protection device foldable or rollable, facilitating storage, when not in use. By tensioning the upper edge element, the upper edge can be retained taut. However, also for this technical solution, the upper edge is straight, when in use, resulting in an interspace between the upper edge of the cargo protection device and the ceiling of the vehicle.
Further, many cargo protection devices of the prior art solutions are complicated to attach to the vehicle interior. Firstly, it may be difficult to unpack the cargo protection device from its storage. Secondly, it may be complicated to attach the cargo protection device to the interior of the vehicle. For example, the size of the cargo protection device or the lengths of its attachments may have to be manually adjusted in order to retain the cargo protection device taut. Document GB 2 206 548 A relates according to its abstract to a removable internal vehicle partition, , e.g. a dog guard, which has mounting means, e.g. plates to which partition legs are fixed, which are secured to existing mountings in the sides of the vehicle, e.g. roller blind mounting holes. The mounting means may take many forms. The top corners of the partition may have projections, which are sandwiched between the vehicle tailgate and the body seal to retain the partition or straps with hooks which engage over gas-strut mountings. There is thus a desire for an improved cargo protection device.
Many of the properties of the cargo protection device are derived from corner elements used for attachment of the cargo protection device to the interior of the vehicle. There is thus also a desire for an improved corner element of the cargo protection device.

### SUMMARY

The object of the present disclosure is to overcome or ameliorate at least one of the disadvantages of the prior art, or to provide a useful alternative.

The object above may be achieved by the subject-matter of claim 1.
Thus, in a first aspect of the present invention there is provided a corner element for attachment of a cargo protection device to an interior of a vehicle, the corner element comprising a holding portion, adapted to be located at least partly in, or at, a corner of the cargo protection device intended to be upwards, when the cargo protection device is mounted in the vehicle, and an attachment portion for attachment of the corner element to the interior of the vehicle. The holding portion comprises a first leg and a second leg connected by a central portion, the first leg extending from the central portion in a first direction and the second leg extending from the central portion in a second direction, such that the first and second directions in an untensioned state of the holding portion form an angle α with each other, with 90° < α < 110°. The attachment portion extends from the central portion of the holding portion, in a third direction, which third direction has a first component in a direction opposite to the first direction and a second component in a direction opposite to the second direction.

Positional references used herein, such as upper, lower back and front, relate to when the cargo protection device is mounted in the interior of the vehicle by means of the corner element. However, the cargo protection device can be dismounted from the interior of the vehicle, and stored or transported as folded and/or rolled. The corner element may be sold as a separate item, or it may be sold together with the cargo protection device. The cargo protection device may be sold as a separate item, or it may be sold together with the vehicle.

The holding portion bridges the first and second legs and provides a suitable location for connecting the attachment portion to the rest of the corner element. The attachment portion is suitably non-rotationally connected to the holding portion. Purely as an example, the corner element may be made of a rigid material, such as a metal or a metal alloy, e.g. steel, and the attachment portion may be welded to the central portion.

The size of the corner element is typically much less than the size of the cargo protection device, e.g. the length of the legs being between 50 and 300 mm, preferably between 75 and 200 mm, more preferably between 100 and 150 mm and the length of the attachment portion being between 10 and 200 mm, preferably between 20 and 150 mm, more preferably between 50 and 100 mm. The length of the holding portion may be shorter than that of the legs, e.g. between 1 and 100 mm, preferably between 2 and 75 mm, more preferably between 5 and 50 mm.

Typically, the cargo protection device comprises four corners, two of which are intended to be located upwards, i.e. upper corners, when the cargo protection device is mounted in a vehicle, and two additional corners, which are intended to be located downwards, i.e. lower corners, when the cargo protection device is mounted in a vehicle. The corner element of this disclosure is intended to be used in or at the two corners intended to be upwards, when the cargo protection device is mounted in a vehicle.

The angle α is preferably chosen, such that the cargo protection device when tensioned substantially follows the shape of a ceiling of the vehicle, in which the cargo protection device is intended to be mounted, which ceiling typically has a certain curvature. Therefore the angle α is above 90°, since 90° would have corresponded to a completely flat ceiling. The angle α may e.g. be above 91 °, above 92° or above 95°. Appropriate values for an upper limit of the angle α would be 100° or 110°. The angle α is further preferably chosen, such that the corner element will tension the cargo protection device, and especially its upper edge, in order to retain it taut, when applying a force at a lower portion of the cargo protection device, preferably at a lower edge of the cargo protection device, more preferably at or adjacent to one, or each, of the additional corners at the lower edge of the cargo protection device.

If the legs are curved, i.e. not straight, the angle α may be defined according to claim 1. When the cargo protection device is tensioned, the angle α may change. If the corner element is made of a rigid material, the angle α will substantially not, or not at all, change under the tension forces applied, when mounting the cargo protection device in the vehicle. The corner element may help to receive and distribute impact forces in case of a collision involving the vehicle, e.g. a frontal collision pushing the cargo forwards against the cargo protection device. The collision forces are higher than the forces used, when mounting the cargo protection device and may be high enough to elastically and/or plastically deform the corner element. The rigidity of the corner element may be increased by providing the central portion with a reinforcement, e.g. increasing the thickness and/or the width of the central portion.
The third direction is partly opposite to the first direction and partly opposite to the second direction. It has a first component in a direction opposite to the first direction and a second component in a direction opposite to the second direction. Both these components are positive and different from zero. When the cargo protection device is mounted in the vehicle, the attachment portion then points in a direction, which is somewhere between laterally towards the closest side wall and upwards towards the ceiling. The attachment portion may e.g. point obliquely upwards. If the attachment portion is curved, the third direction is defined by the direction of a tangent at the end of the attachment portion.
The holding portion of the corner element may have, at least partly, an arcuate shape, the first and second legs forming portions of the arcuate shape. The angle α is then defined by the directions of a tangent to the shape of the legs at the ends of the respective leg, as described above for non-straight legs.

The third direction may form an angle β₁ with the first direction, such that 90° ≤ β₁ ≤ 180°, preferably 100° ≤ β₁ ≤ 165°, more preferably 110° ≤ β₁ ≤ 150°, most preferably 120° ≤ β₁ ≤ 140°. Then the angle β₂ to the second direction D₂ may be given by β₂ = 360°- β₁ - α.

In a second aspect of the present invention there is provided a cargo protection device comprising a foldable and/or rollable fabric portion having two corners intended to be upwards, when the cargo protection device is mounted in a vehicle, and at least one corner element according to above located in or at one or each of the corners of the fabric portion.

The cargo protection device may be used to separate a passenger compartment from a luggage compartment of the vehicle. In particular, the cargo protection device prevents cargo from being thrown in a forward direction and hitting the users of the vehicle, in case of e.g. a frontal collision. The cargo protection device may thus be used as a partitioning wall.

The fabric portion forms a main portion of the cargo protection device. The fabric portion is made of a flexible material, such that it may be folded and/or rolled. Suitable materials are a fabric, a net or a plastic film. The fabric portion is preferably at least partly transparent, such that it is possible for the driver of the vehicle to see through it when looking backwards in the vehicle, e.g. through a mirror.

The cargo protection device typically has a shape of substantially a rectangle, a square, or a trapezium. The shape is preferably adapted to the vehicle, wherein it is intended to be mounted, e.g. the upper edge may be shaped to follow the curvature of the ceiling of the vehicle, wherein it is intended to be mounted.

In a preferred embodiment, there is one corner element according to the disclosure in, or at, each of the two corners of the cargo protection device intended to be upwards, when the cargo protection device is mounted in the vehicle. However, the cargo protection device would also work with a corner element in only one of the upper corners.

The size of the corner element is typically much less than the size of the cargo protection device, as described above. Thus, even if the corner element is made of a rigid material, the cargo protection device may be folded and/or rolled as one unit.

With the cargo protection device according to the invention, it is possible to omit using an elongated stiff element, such as one or more stiff bars along the upper edge of the fabric portion, which is commonly used according to prior art technology. In fact, it is according to the invention possible to provide a cargo protection device without any other stiff element than the corner element/s, such that the cargo protection device may be folded and/or rolled as a whole. This also keeps the weight of the cargo protection device low and reduces its cost.

The fabric portion may comprise an edge trim, the edge trim also being foldable and/or rollable, such that the edge trim may be rolled or folded together with the rest of the fabric portion. The edge trim is preferably formed in one part and encloses at least 50%, preferably at least 70%, more preferably at least 90%, most preferably substantially all of a circumference of the fabric portion. It is thus to be noted that the edge trim by itself is not rigid, and the edge trim will easily bend. The edge trim does thus not comprise a stiff bar. It would in principle be possible to insert a bar in the edge trim, but that would make it non-foldable and rollable only in one direction. However, as is described below, there is, in the cargo protection device according to the invention, no need for a stiff bar in order to provide the cargo protection device with a taut upper edge, since the corner element/s will stretch the upper edge of the fabric portion. In addition, the corner element can be shaped to follow the curvature of the ceiling of the vehicle.

The edge trim may comprise a belt, e.g. a belt similar to the belts which are used as safety belts. Such an edge trim may be folded and/or rolled, and is yet strong enough to withstand a considerable force, if pulled in its length direction.

The fabric portion may further comprise a pocket wall, the pocket wall together with a portion of the fabric portion forming a pocket. The pocket may be used for storing items, when the cargo protection device is in use. When the cargo protection device is not in use, the pocket may be used to store the rest of cargo protection device by folding or rolling the rest of the fabric portion into the pocket.

The pocket may be formed along an edge of the fabric portion, preferably along the edge being intended to be a lower edge when the cargo protection device is mounted in a vehicle.

The pocket wall may have a first long side edge attached to the edge of the fabric portion, a first side edge attached to a portion of a first side edge of the fabric portion, a second side edge attached to a portion of a second side edge of the fabric portion. One or more engagement means may be arranged at or adjacent to a second long side edge of the pocket wall for engagement with the fabric portion, the engagement means for example comprising a button and/or a hook and loop arrangement. In that case it may be beneficial, if the pocket wall extends all the way out to the side edges of the fabric portion, such that the pocket has the same width as the rest of the fabric portion, which hence is easy to roll and place in the pocket.

The fabric portion may also have two additional corners intended to be downwards, when the cargo protection device is mounted in a vehicle, hence being lower corners. The cargo protection device may further comprise at least one connection means at or adjacent to one, or each, of the additional corners for attachment to the interior of the vehicle.

The connection means may comprise a belt adapted for attachment to the interior of the vehicle, when the cargo protection device is mounted in a front position in the vehicle. The belt preferably has an adjustable length, e.g. by adjusting the length by means of a buckle. The front position is located behind a backrest of a driver's seat and a backrest of a seat of a possible front passenger. In the front position, the cargo protection device protects the driver and a possible front seat passenger from cargo being thrown forwards from the luggage compartment.

The connection means may comprise a hook adapted for attachment to the interior of the vehicle, when the cargo protection device is mounted in a back position in the vehicle. The back position is located behind a backrest of one or more back seats. The backrests of the back seats are then in a substantially upright position, suitable for passengers in the back seat. The cargo protection device may extend substantially from the ceiling to a floor of the luggage compartment. In the back position, the cargo protection device protects the users of the back seat and/or the front seats from cargo being thrown forwards from the luggage compartment.

The above-mentioned belt may also be used for attachment of the cargo protection device in the back position in the vehicle. The belt may be provided with a hook for attachment to the interior of the vehicle.

The connection means may be resilient, e.g. comprising an elastic material, such that it is easy to connect the connection means to the interior of the vehicle in an elongated state by stretching it, and the connection means then is able to spring back and retain the cargo protection device in position with taut edges, especially a taut upper edge. The resiliency may be between 1 and 10 cm, preferably between 3 and 7 cm. The resiliency may also be used to compensate for variation in size between different cargo protection devices and/or vehicles due to production tolerances.

By providing any of the above-mentioned connection means, the cargo protection device is easy to attach to the interior of the vehicle. By providing ready attachments for both the front and back positions for the cargo protection device, the cargo protection device is ready to use without any additional manual resetting of the connection means.

In a third aspect of the present invention there is provided a vehicle comprising a cargo protection device according to above.

The vehicle may comprising a foldable back seat, wherein the height of the cargo protection device is adapted to substantially cover the interspace between the back seat in a folded position and a ceiling of the vehicle. In particular, the angle α of the legs of the corner element may be chosen, such that the cargo protection device substantially follows the shape of the ceiling, which typically has a certain curvature.

In a fourth aspect of the present invention, there is provided a method of attaching a cargo protection device according to above to an interior of a vehicle, the method comprising
- attaching both of the upper corners to the interior of the vehicle at a ceiling or a respective upper portion of a respective side wall of the vehicle by means of the corner elements,
- tensioning the cargo protection device by applying a tension force at a lower portion of the cargo protection device, preferably at the lower edge of the fabric portion, more preferably at, or adjacent to, one or each of the lower corners of the fabric portion,
- attaching the additional corners to the interior of the vehicle.

The tensioning force may be applied by utilizing the above-mentioned connection means. Further, the additional corners, i.e. the lower corners, may be attached to the interior of the vehicle by means of the above-mentioned connection means.

At least one of the upper corners is provided with a corner element according to above. Due to the special shape of the corner element, e.g. having the above-mentioned angle α between the legs, the corner element will stretch the upper edge of the fabric portion. Thereby, it is possible to omit using an elongated stiff element, such as one or more bars along the upper edge of the fabric portion, which is commonly used according to prior art technology. In fact, it is according to the invention possible to provide a cargo protection device without any other stiff element than the corner element, such that the cargo protection device may be folded and/or rolled as a whole.

### BRIEF DESCRIPTION OF THE DRAWINGS

The present invention will hereinafter be further explained by means of non-limiting examples with reference to the appended drawings wherein:
- Fig. 1: is a schematic view of a portion of an interior of a vehicle illustrating a cargo protection device according to the invention mounted in a front position,
- Fig. 2: is a schematic view of a corner element according to the invention of the cargo protection device of Fig. 1,
- Fig. 3: is a schematic view of an alternative corner element according to the invention, and
- Fig. 4: is a schematic view of a portion of an interior of a vehicle illustrating the cargo protection device of Fig. 1 mounted in a back position.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

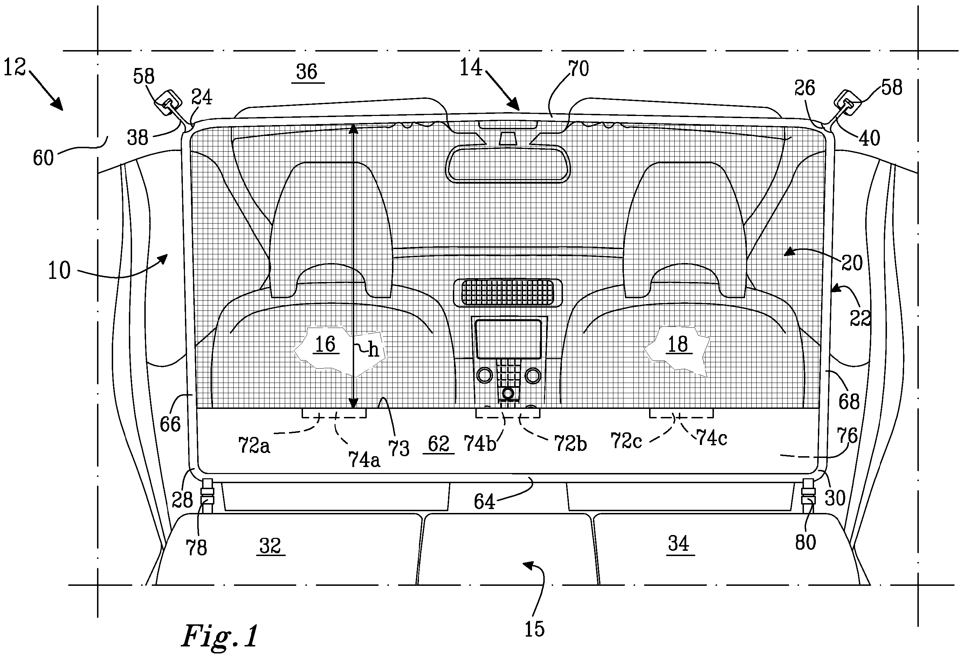

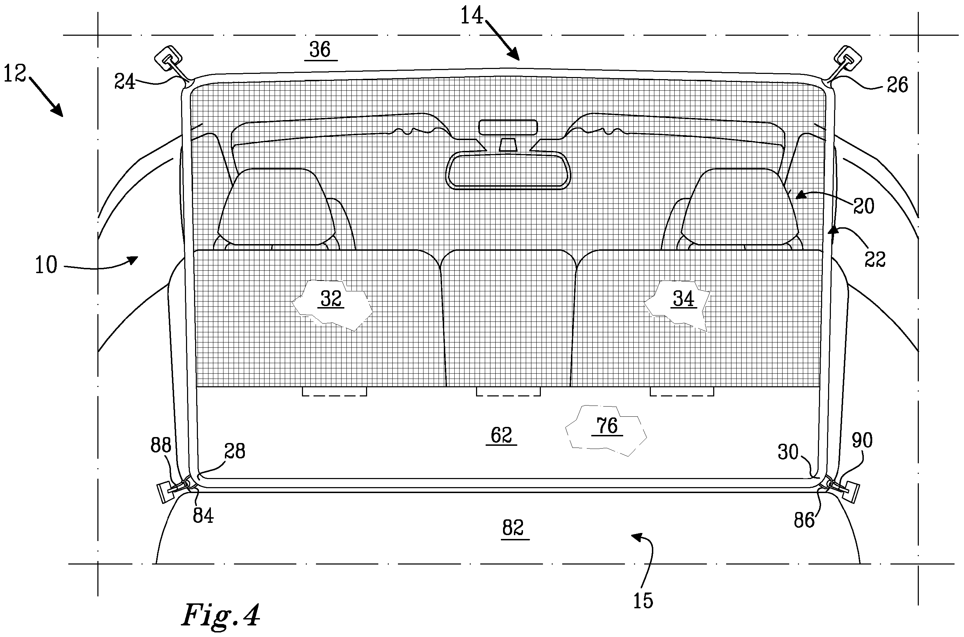

Figure 1 schematically illustrates a portion of an interior 10 of a vehicle 12. A cargo protection device 14 is attached in a position, wherein the cargo protection device 14 will help to protect the users of the vehicle from cargo being thrown from the luggage compartment 15 onto the users of the vehicle, e.g. when braking the vehicle 12. The cargo protection device 14 of Figure 1 occupies a front position located behind a backrest 16 of the driver's seat and a backrest 18 of a seat of a possible front passenger. The cargo protection device 14 then protects the driver and a possible front seat passenger. As an alternative, the cargo protection device 14 may instead be attached in a back position, which will be further explained in conjunction with Figure 4.

The cargo protection device 14 comprises a fabric portion 20 forming a main portion of the cargo protection device 14. The fabric portion 20 is made of a flexible material, such that it may be folded and/or rolled. Suitable materials are a fabric, a net or a plastic film. Figure 1 illustrates a fine net. The fabric portion 20 is preferably at least partly transparent, such that it is possible for the driver of the vehicle to see through it when looking backwards in the vehicle 12, e.g. through a mirror.

Positional references used herein, such as upper, lower back and front, relate to when the cargo protection device 14 is mounted in the interior 10 of the vehicle 12. However, the cargo protection device 14 can be dismounted from the interior 10 of the vehicle 12, and stored or transported as folded and/or rolled. The cargo protection device 14 may be sold as a separate item or it may be sold together with the vehicle 12.

The fabric portion 20 comprises an edge trim 22, e.g. made of a belt. The edge trim 22 is also made of a flexible material, such that it may be folded and/or rolled together with the rest of the fabric portion 20. The edge trim 22 may e.g. comprise a belt similar to the belts, which are used as safety belts.

The edge trim 22 is formed in one part and encloses a circumference of the fabric portion 20. The edge trim 22 is attached to the rest of the fabric portion 20. It may e.g. be sewn to and/or glued to the rest of the fabric portion 20. The edge trim 22 may be used to distribute forces applied at the fabric portion 20, e.g. from the cargo, in case of a braking or a collision, to attachment points to the vehicle interior 10 at upper corners 24, 26 and lower corners 28, 30 of the fabric portion 20. The edge trim 22 is also used to tension the fabric portion 20, as will be described below.

The cargo protection device 14 has a height h, which is adapted to substantially cover the interspace between a back rest 32, 34 of a back seat in a folded position and a ceiling 36 of the vehicle 12. Thereby, the cargo protection device 20 covers the lateral interspace between the backrest 16 of the driver's seat and the back rest 18 of the seat of a possible front passenger, such that cargo cannot pass in between the two front seats.

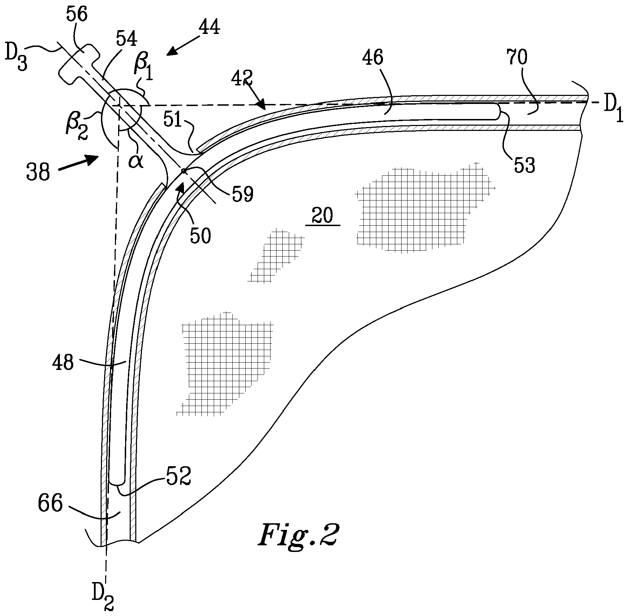

Each of the upper corners 24, 26 comprises a corner element 38, 40, which is described in detail in conjunction with Figure 2. The corner elements 38, 40 are used to attach the upper corners 24, 26 of the fabric portion 20 to the vehicle interior 10. The corner elements 38, 40 may be made of a rigid material, e.g. a metal or alloy, such as steel. They help to receive and distribute impact forces in case of a collision involving the vehicle 12, e.g. a frontal collision pushing the cargo forwards against the cargo protection device 14.

As may be gleaned from Figure 2, the corner element 38 comprises a holding portion 42 and an attachment portion 44. The corner element is in Figure 2 illustrated in untensioned state. The holding portion 42 comprises a first leg 46 and a second leg 48 connected by a central portion 50. The central portion 50 is in the illustrated case rather short. It bridges the legs 46, 48 and provides a suitable location for fixing the attachment portion 44 to the rest of the corner element 38. If the corner element 38 is made of a metal or alloy, such as steel, the attachment portion 44 may be welded to the central portion 50. The edge trim 22 forms a channel in which the legs 46, 48 are, at least partly, but in this case substantially fully inserted. The fabric portion 20 has a small opening 51 through which the attachment portion 44 protrudes from the central portion 50.

The first leg 46 extends from the central portion 50 in a first direction D₁ and the second leg 48 extends from the central portion 50 in a second direction D₂, such that the first D₁ and second directions D₂ in an untensioned state, as in Figure 2, form an angle α with each other, with 90°< α < 110°. The holding portion 42 has an arcuate shape. Therefore the directions D₁, D₂ of the respective legs 46, 48 are determined as the direction of a tangent to the arcuate shape at the ends 52, 53 of the respective leg 46, 48. The angle α is preferably chosen, such that the cargo protection device 14 substantially follows the shape of the ceiling 36, which typically has a certain curvature.

The attachment portion 44 comprises an elongated portion 54 ending by an attachment means 56. The attachment means 56 is adapted for easy attachment to the vehicle, preferably without any use of tools. The illustrated embodiment show a mushroom-shaped head adapted to fit into a receiving cavity 58 in the ceiling 36 or an upper portion of a side wall 60 of the vehicle 12. As an alternative, the attachment portion 44 may be attached by a hook comprised in either the attachment portion 44, or in the ceiling 36 or side wall 60.

The attachment portion 44 extends from the central portion 50 in a third direction D₃, which is partly opposite to the first direction D₁ and partly opposite to the second direction D₂. The third direction D₃ of the attachment portion 44 forms an angle β₁ with the first direction D₁, such that 90° ≤ β₁ ≤ 180°, preferably 100° ≤ β₁ ≤ 165°, more preferably 110° ≤ β₁ ≤ 150°, most preferably 120° ≤ β₁ ≤ 140°. Thereby the angle β₂ to the second direction D₂ is given by β₂ = 360°- β₁ - α. The attachment portion 44 is non-rotationally connected to the holding portion 42. There is hence no rotational movement in a location 59, where the attachment portion 44 meets the holding portion 42, even when the fabric portion 20 is tensioned.

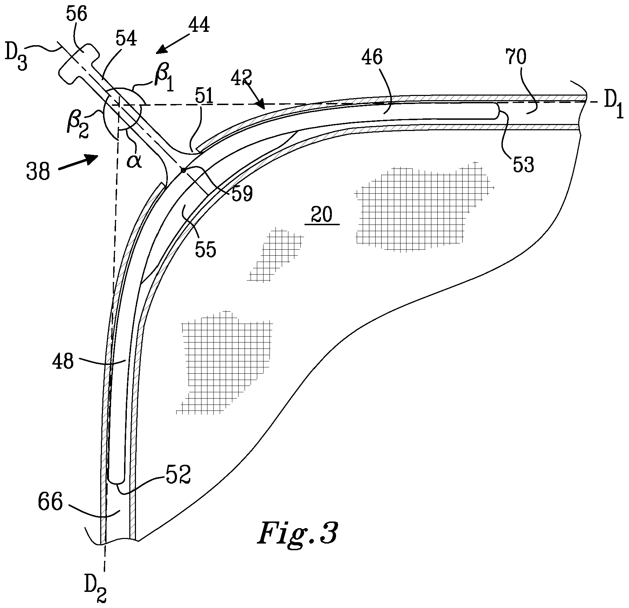

Figure 3 illustrates an alternative embodiment of the corner element 38, wherein the central portion 50 is reinforced by a reinforcement 55. Preferably, the reinforcement 55 has a shape and a size fitting in the channel formed by the edge trim 22, or the channel may be locally wider. The other details of the alternative embodiment are similar to those of the corner element of Figure 2 and will not be explained again.

Returning again to Figure 1, it may be gleaned from the figure that the fabric portion 20 of the cargo protection device 14 further comprises a pocket wall 62. The pocket wall 62 is attached to a lower edge 64 of the fabric portion 20, e.g. by sewing and/or gluing it together with the edge trim 22 to the fabric portion 20. The pocket wall 62 is also attached to a lower portion of a first side edge 66 of the fabric portion 20 and a lower portion of a second opposite side edge 68 of the fabric portion 20. The fabric portion also comprises a fourth edge, an upper edge 70 being opposite to the lower edge 64.

One or more engagement means 72a, 72b, 72c are arranged at or adjacent to an upper edge 73 of the pocket wall 62. The fabric portion 20 comprises corresponding engagement means 74a, 74b, 74c for receiving the engagement means 72a, 72b, 72c of the pocket wall 62. Thereby a pocket 76 is formed by the pocket wall 62 and a portion of the fabric portion 20, which portion is extending between the lower edge 64 and a position of the fabric portion 20 corresponding to the upper edge 73 of the pocket wall 62. The pocket 76 may be used for storing items, when the cargo protection device 14 is in use. When the cargo protection device 14 is not in use, the pocket 76 may be used to store the rest of cargo protection device 14 by folding or rolling the rest of the fabric portion 20 into the pocket 76. In that case it is beneficial, if the pocket wall 62 extends all the way out to the side edges 66, 68, such that the pocket 76 has the same width as the rest of the fabric portion 20.

The cargo protection device 14 further comprises at least one connection means 78, 80 for connecting the lower edge 64 to the interior 10 of the vehicle 12. In the illustrated embodiment of Figure 1, there is one at each lower corner 28, 30. The connection means 78, 80 comprises a belt with an adjustable length, which belt is adapted to be attached to the vehicle interior 10, e.g. to an attachment means at a floor of the vehicle 12, e.g. an ISO fix attachment means, or to an attachment means fixed to the chair rail of one the front seats (not visible in Figure 1). The connection means 78, 80 are attached in the vicinity of the lower corners 28, 30 of the fabric portion 20. The attachment means at the floor or chair rail may comprise a loop and the connection means 78, 80 may comprise a hook (not visible in Figure 1), which is adapted to grip into the loop. In addition to being adjustable, or as a complement, the connection means 78, 80 may be resilient, e.g. comprising an elastic material, such that it is easy to connect the connection means 78, 80 in an elongated state and the connection means 78, 80 then springs back and retains the cargo protection device 14 in the intended position. The resiliency may be between 1 and 10 cm, preferably between 3 and 7 cm. The resiliency may also be used to compensate for variation in size between different cargo protection devices 14 and/or vehicles 12 due to production tolerances.

The cargo protection device 14 may also be utilized in a back position, as is illustrated in Figure 4. The backrests 32, 34 of the back seats are then in a substantially upright position, suitable for passengers in the back seat. The cargo protection device 14 extends substantially from the ceiling 36 to a floor 82 of the luggage compartment 15. The lower corners 28, 30 are attached by a connection means, here in the form of a hook 84, 86 at each lower corner 28, 30 gripping around a respective receiving loop 88, 90 in the interior 10 of the vehicle 12. The hooks 84, 86 may be resiliently attached to the fabric portion 20, such that they are adapted to be easily attached to the loops 88, 90 and yet spring back and retain the cargo protection device 14 in position. The upper corners 24, 26 are attached in a similar way as for Figure 1.

Normally, the cargo protection device 14 is adapted for attachment at either the front position or the back position. It is thus provided with both the connection means 78, 80 illustrated in Figure 1 and the connection means, the hooks 84, 86 of Fig 3. By providing ready connection means for both the front and back positions, the cargo protection device 14 is ready to use without any additional manual resetting of the connection means.

When mounting the cargo protection device 14 to the interior 10 of the vehicle 12, the attachment means 56 of the corner elements 38, 40 are engaged with the ceiling 36 or the upper portion of a side wall 60. In the illustrated embodiment, the mushroom-shaped head is inserted into the receiving cavity 58 in the ceiling 36 in either the front position of the cargo protection device 14, as in Figure 1, or in the back position, as in Figure 4. The receiving cavity 58 has an opening portion, where it is possible to insert the mushroom-shaped head of the attachment means 56 and another opening having a width less than that of the mushroom-shaped head but larger than or as large as that of elongated portion 54, keeping the mushroom-shaped head in place, once it has been inserted.

Thereafter the cargo protection device 14 is tensioned by applying a tension force at a lower portion of the cargo protection device 14, e.g. at the lower edge 64. Preferably the force is applied at or in the vicinity of the lower corners 28, 30, e.g. by tensioning the connection means 78, 80. Thereby the fabric portion 20 is stretched. In particular, the corner element 38, 40 will stretch the upper edge 70 of the fabric portion 20. It is hence possible to omit using an elongated stiff element, such as one or more elongated stiff bars along the upper edge 70 of the fabric portion 20, which is commonly used according to prior art technology. In fact, it is according to the invention possible to provide a cargo protection device 14 without any other stiff element than the corner element, such that the cargo protection device 14 may be folded and/or rolled as a whole.

## Claims

1. A corner element (38, 40) for attachment of an upper corner (24, 26) of a cargo protection device (14) to an interior (10) of a vehicle (12) at a ceiling (36) or at an upper portion of a side wall (62) of said vehicle (12), said corner element (38, 40) comprising
- a holding portion (42), adapted to be located at least partly in or at said upper corner (24, 26), which is intended to be upwards, when said cargo protection device (14) is mounted in the vehicle (12),
- an attachment portion (44), for attachment of said corner element (38, 40) to said interior (10) of said vehicle (12),
said holding portion (42) comprising a first leg (46) and a second leg (48) connected by a central portion (50), said first leg (46) extending from said central portion (50) in a first direction (D₁) and said second leg (48) extending from said central portion (50) in a second direction (D₂), such that the first (D₁) and second (D₂) directions in an untensioned state of said holding portion (42) form an angle α with each other with 90° < α < 110°,
said attachment portion (44) extending from said central portion (50) of said holding portion (42) in a third direction (D₃), which third direction (D₃) has a first component in a direction opposite to said first direction (D₁) and a second component in a direction opposite to said second direction (D₂),
the length of the legs being between 50 and 300 mm and the length of the attachment portion being between 10 and 200 mm.

2. The corner element (38, 40) according to claim 1 being made of a rigid material.

3. The corner element (38, 40) according to claim 1 or 2, wherein said holding portion (42) has at least partly an arcuate shape, said first and second legs (46, 48) forming portions of said arcuate shape.

4. The corner element (38, 40) according to claim 1, 2 or 3, wherein said third direction (D₃) forms an angle β₁ with said first direction (D₁), such that 90° ≤ β₁ ≤ 180°, preferably 100° ≤ β₁ ≤ 165°, more preferably 110° ≤ β₁ ≤ 150°, most preferably 120° ≤ β₁ ≤ 140°.

5. A cargo protection device (14) comprising
- a foldable and/or rollable fabric portion (20) having two corners (24, 26) intended to be upwards, when said cargo protection device (14) is mounted in a vehicle (12), and
- at least one corner element (38, 40) according to any one of the preceding claims located in or at one or each of said upper corners (24, 26) of said fabric portion (20), and
wherein there is no elongated stiff element, such as one or more elongated stiff bars, along an upper edge (70) of said fabric portion (20).

6. The cargo protection device (14) according to claim 5, wherein said fabric portion (20) comprises an edge trim (22), said edge trim (22) also being foldable and/or rollable, said edge trim (22) being formed in one part and enclosing at least 50%, preferably at least 70%, more preferably at least 90%, most preferably substantially all of a circumference of said fabric portion (20).

7. The cargo protection device (14) according to claim 6, wherein said foldable edge trim (22) comprises a belt.

8. The cargo protection device (14) according to any one of claims 5-7, wherein said fabric portion (20) further comprises a pocket wall (62), said pocket wall (62) together with a portion of said fabric portion (20) forming a pocket (76).

9. The cargo protection device (14) according to claim 8, wherein said pocket (76) is formed along an edge (64) of said fabric portion (20), preferably said edge (64) being intended to be a lower edge, when said cargo protection device (14) is mounted in a vehicle (12).

10. The cargo protection device (14) according to claim 8 or 9, wherein said pocket wall (62) has a first long side edge attached to said edge (64) of said fabric portion (20), a first side edge attached to a portion of a first side edge (66) of said fabric portion (20), a second side edge attached to a portion of a second side edge (68) of said fabric portion (20), and wherein one or more engagement means (72a, 72b, 72c) are arranged at or adjacent to a second long side edge (73) of said pocket wall (62) for engagement with said fabric portion (20), said engagement means (72a, 72b, 72c) for example comprising a button and/or a hook and loop arrangement.

11. The cargo protection device (14) according any one of claims 5-10, wherein said fabric portion (20) has two additional corners (28, 30) intended to be downwards when said cargo protection device (14) is mounted in a vehicle (12), said cargo protection device (14) further comprising at least one connection means (78, 80; 84, 86) at or adjacent to one or each of said additional corners (28, 30) for attachment to said interior (10) of said vehicle (12).

12. The cargo protection device (14) according to claim 11, wherein said connection means (78, 80) comprises a belt adapted for attachment to said interior (10) of said vehicle (12), when said cargo protection device (14) is mounted in a front position in said vehicle (12), preferably said belt having an adjustable length.

13. The cargo protection device (14) according to claim 11 or 12, wherein said connection means (84, 86) comprises a hook adapted for attachment to said interior (10) of said vehicle (12), when said cargo protection device (14) is mounted in a back position in said vehicle (12).

14. The cargo protection device (14) according to any one of claims 11-13, wherein said connection means (78, 80; 84, 86) is resilient.

15. A vehicle (12) with an at least slightly curved ceiling (36), said vehicle (12) comprising a cargo protection device (14) according to any one of claims 5-14, which is adapted to substantially follow the shape of said ceiling (36).

16. A method of attaching a cargo protection device (14) according to any one of claims 5-14 to an interior (10) of a vehicle (12), said method comprising
- attaching both of said upper corners (24, 26) to said interior (10) of said vehicle (12) at a ceiling (36), or at a respective upper portion of a respective side wall (62) of said vehicle (12), by means of said corner elements (38, 40),
- tensioning said cargo protection device (14) by applying a tension force at a lower portion of said cargo protection device (14), preferably at a lower edge (64) of said fabric portion (20), more preferably at or adjacent to one or each of said additional corners (28, 30) of said fabric portion (20), such that said cargo protection device (14) substantially follows the shape of said ceiling (36),
- attaching said additional corners (28, 30) to said interior (10) of said vehicle (12).

## Patentansprüche

1. Eckelement (38, 40) zur Anbringung einer oberen Ecke (24, 26) einer Frachtschutzvorrichtung (14) in einem Innenraum (10) eines Fahrzeugs (12) an einer Decke (36) oder an einem oberen Abschnitt einer Seitenwand (62) des Fahrzeugs (12), wobei das Eckelement (38, 40) umfasst:
- einen Halteabschnitt (42), der geeignet ist, sich wenigstens zum Teil in oder an der oberen Ecke (24, 26) zu befinden, die dazu bestimmt ist, nach oben gerichtet zu sein, wenn die Frachtschutzvorrichtung (14) in dem Fahrzeug (12) befestigt ist,
- einen Anbringungsabschnitt (44) zur Anbringung des Eckelements (38, 40) in dem Innenraum (10) des Fahrzeugs (12),
wobei der Halteabschnitt (42) einen ersten Schenkel (46) und einen zweiten Schenkel (48) umfasst, die durch einen Mittelabschnitt (50) verbunden sind, wobei sich der erste Schenkel (46) von dem Mittelabschnitt (50) in einer ersten Richtung (D₁) erstreckt und sich der zweite Schenkel (48) von dem Mittelabschnitt (50) in einer zweiten Richtung (D₂) erstreckt, und zwar auf eine solche Weise, dass die erste (D₁) und die zweite (D₂) Richtung in einem ungespannten Zustand des Halteabschnitts (42) einen Winkel α miteinander bilden, wobei 90° < α < 110° ist,
wobei sich der Anbringungsabschnitt (44) von dem Mittelabschnitt (50) des Halteabschnitts (42) in einer dritten Richtung (D₃) erstreckt, wobei die dritte Richtung (D₃) eine erste Komponente in einer zu der ersten Richtung (D₁) entgegengesetzt verlaufenden Richtung und eine zweite Komponente in einer zu der zweiten Richtung (D₂) entgegengesetzt verlaufenden Richtung aufweist,
wobei die Länge der Schenkel zwischen 50 und 300 mm liegt und die Länge des Anbringungsabschnitts zwischen 10 und 200 mm liegt.

2. Eckelement (38, 40) nach Anspruch 1, hergestellt aus einem starren Material.

3. Eckelement (38, 40) nach Anspruch 1 oder 2, wobei der Halteabschnitt (42) wenigstens zum Teil eine gebogene Form aufweist, wobei der erste und der zweite Schenkel (46, 48) Abschnitte mit der gebogenen Form bilden.

4. Eckelement (38, 40) nach Anspruch 1, 2 oder 3, wobei die dritte Richtung (D₃) auf eine solche Weise einen Winkel β₁ mit der ersten Richtung (D₁) bildet, dass 90° ≤ β₁ ≤ 180°, vorzugsweise 100° ≤ β₁ ≤ 165°, insbesondere 110° ≤ β₁ ≤ 150°, besonders bevorzugt 120° ≤ β₁ ≤ 140° ist.

5. Frachtschutzvorrichtung (14), umfassend:
- einen faltbaren und/oder aufrollbaren Gewebeabschnitt (20), der zwei Ecken (24, 26) aufweist, die dazu bestimmt sind, nach oben gerichtet zu sein, wenn die Frachtschutzvorrichtung (14) in einem Fahrzeug (12) befestigt ist, und
- wenigstens ein Eckelement (38, 40) nach einem der vorhergehenden Ansprüche, das sich in oder an einer oder jeder der oberen Ecken (24, 26) des Gewebeabschnitts (20) befindet,
wobei sich kein längliches steifes Element, wie zum Beispiel ein oder mehrere längliche steife Stangen, entlang einem oberen Rand (70) des Gewebeabschnitts (20) befindet.

6. Frachtschutzvorrichtung (14) nach Anspruch 5, wobei der Gewebeabschnitt (20) einen Randstreifen (22) umfasst, wobei der Randstreifen (22) ebenfalls faltbar und/oder aufrollbar ist, wobei der Randstreifen (22) einstückig ausgebildet ist und wenigstens 50%, vorzugsweise wenigstens 70%, insbesondere wenigstens 90%, besonders bevorzugt im Wesentlichen die Gesamtheit eines Umfangs des Gewebeabschnitts (20) umschließt.

7. Frachtschutzvorrichtung (14) nach Anspruch 6, wobei der faltbare Randstreifen (22) einen Gurt umfasst.

8. Frachtschutzvorrichtung (14) nach einem der Ansprüche 5 bis 7, wobei der Gewebeabschnitt (20) ferner eine Taschenwand (62) umfasst, wobei die Taschenwand (62) zusammen mit einem Abschnitt des Gewebeabschnitts (20) eine Tasche (76) bildet.

9. Frachtschutzvorrichtung (14) nach Anspruch 8, wobei die Tasche (76) entlang einem Rand (64) des Gewebeabschnitts (20) ausgebildet ist, wobei der Rand (64) vorzugsweise dazu bestimmt ist, ein unterer Rand zu sein, wenn die Frachtschutzvorrichtung (14) in einem Fahrzeug (12) befestigt ist.

10. Frachtschutzvorrichtung (14) nach Anspruch 8 oder 9, wobei die Taschenwand (62) einen an dem Rand (64) des Gewebeabschnitts (20) angebrachten ersten Längsseitenrand, einen an einem Abschnitt eines ersten Seitenrands (66) des Gewebeabschnitts (20) angebrachten ersten Seitenrand und einen an einem Abschnitt eines zweiten Seitenrands (68) des Gewebeabschnitts (20) angebrachten zweiten Seitenrand aufweist und wobei ein oder mehrere Eingriffsmittel (72a, 72b, 72c) an einem zweiten Längsseitenrand (73) der Taschenwand (62) oder angrenzend an denselben zum Eingriff mit dem Gewebeabschnitt (20) angeordnet sind, wobei die Eingriffsmittel (72a, 72b, 72c) zum Beispiel eine Knopf- und/oder eine Klettverschlussanordnung umfassen.

11. Frachtschutzvorrichtung (14) nach einem der Ansprüche 5 bis 10, wobei der Gewebeabschnitt (20) zwei zusätzliche Ecken (28, 30) aufweist, die dazu bestimmt sind, nach unten gerichtet zu sein, wenn die Frachtschutzvorrichtung (14) in einem Fahrzeug (12) befestigt ist, wobei die Frachtschutzvorrichtung (14) ferner wenigstens ein Verbindungsmittel (78, 80; 84, 86) an einer oder jeder der zusätzlichen Ecken (28, 30) oder angrenzend an diese zur Anbringung in dem Innenraum (10) des Fahrzeugs (12) umfasst.

12. Frachtschutzvorrichtung (14) nach Anspruch 11, wobei das Verbindungsmittel (78, 80) einen Gurt umfasst, der zur Anbringung in dem Innenraum (10) des Fahrzeugs (12) geeignet ist, wenn die Frachtschutzvorrichtung (14) in einer vorderen Position in dem Fahrzeug (12) befestigt ist, wobei der Gurt vorzugsweise eine einstellbare Länge aufweist.

13. Frachtschutzvorrichtung (14) nach Anspruch 11 oder 12, wobei das Verbindungsmittel (84, 86) einen Haken umfasst, der zur Anbringung in dem Innenraum (10) des Fahrzeugs (12) geeignet ist, wenn die Frachtschutzvorrichtung (14) in einer hinteren Position in dem Fahrzeug (12) befestigt ist.

14. Frachtschutzvorrichtung (14) nach einem der Ansprüche 11 bis 13, wobei das Verbindungsmittel (78, 80; 84, 86) elastisch ist.

15. Fahrzeug (12) mit einer wenigstens leicht gekrümmten Decke (36), wobei das Fahrzeug (12) eine Frachtschutzvorrichtung (14) nach einem der Ansprüche 5 bis 14 umfasst, die geeignet ist, im Wesentlichen der Form der Decke (36) zu folgen.

16. Verfahren zur Anbringung einer Frachtschutzvorrichtung (14) nach einem der Ansprüche 5 bis 14 in einem Innenraum (10) eines Fahrzeugs (12), wobei das Verfahren umfasst:
- Anbringen beider oberen Ecken (24, 26) in dem Innenraum (10) des Fahrzeugs (12) an einer Decke (36) oder an einem entsprechenden oberen Abschnitt einer entsprechenden Seitenwand (62) des Fahrzeugs (12) mittels der Eckelemente (38, 40),
- Spannen der Frachtschutzvorrichtung (14) durch Aufbringen einer Spannkraft an einem unteren Abschnitt der Frachtschutzvorrichtung (14), vorzugsweise an einem unteren Rand (64) des Gewebeabschnitts (20), insbesondere an einer oder jeder der zusätzlichen Ecken (28, 30) des Gewebeabschnitts (20) oder angrenzend an dieselben auf eine solche Weise, dass die Frachtschutzvorrichtung (14) im Wesentlichen der Form der Decke (36) folgt,
- Anbringen der zusätzlichen Ecken (28, 30) in dem Innenraum (10) des Fahrzeugs (12).

## Revendications

1. Elément d'angle (38, 40) pour la fixation d'un coin supérieur (24, 26) d'un dispositif de protection de marchandises (14) à un intérieur (10) d'un véhicule (12) à un plafond (36) ou à une partie supérieure d'une paroi latérale (62) dudit véhicule (12), ledit élément d'angle (38, 40) comprenant:
- une partie de maintien (42), adaptée pour être disposée au moins partiellement dans ledit ou au niveau dudit coin supérieur (24, 26), qui est destiné à être placé vers le haut, lorsque ledit dispositif de protection de marchandises (14) est monté dans le véhicule (12),
- une partie de fixation (44), pour la fixation dudit élément d'angle (38, 40) audit intérieur (10) dudit véhicule (12),
ladite partie de maintien (42) comprenant une première branche (46) et une seconde branche (48) connectées par une partie centrale (50), ladite première branche (46) s'étendant à partir de ladite partie centrale (50) dans une première direction (D₁), et ladite seconde branche (48) s'étendant à partir de ladite partie centrale (50) dans une deuxième direction (D₂), de telle sorte que la première (D₁) et la seconde (D₂) directions dans un état non tendu de ladite partie de maintien (42) forment un angle α l'une avec l'autre, où 90° < α < 110°,
ladite partie de fixation (44) s'étendant à partir de ladite partie centrale (50) de ladite partie de maintien (42) dans une troisième direction (D₃), ladite troisième direction (D₃) comprenant une première composante dans une direction opposée à ladite première direction (D₁) et une seconde composante dans une direction opposée à ladite deuxième direction (D₂),
la longueur des branches étant comprise entre 50 mm et 300 mm, et la longueur de la partie de fixation étant comprise entre 10 mm et 200 mm.

2. Elément d'angle (38, 40) selon la revendication 1, qui est constitué d'un matériau rigide.

3. Elément d'angle (38, 40) selon la revendication 1 ou 2, dans lequel ladite partie de maintien (42) présente au moins partiellement une forme courbe, lesdites première et seconde branches (46, 48) formant des parties de ladite forme courbe.

4. Elément d'angle (38, 40) selon la revendication 1, 2 ou 3, dans lequel ladite troisième direction (D₃) forme un angle β₁ avec ladite première direction (D₁), de telle sorte que 90° ≤ β₁ ≤ 180°, de préférence 100° ≤ β₁ ≤ 165°, mieux encore 110° ≤ β₁ ≤ 150°, idéalement 120° ≤ β₁ ≤ 140°.

5. Dispositif de protection de marchandises (14), comprenant:
- une partie de tissu pliable et/ou enroulable (20) comprenant deux coins (24, 26) destinés à être placés vers le haut, lorsque ledit dispositif de protection de marchandises (14) est monté dans un véhicule (12), et
- au moins un élément d'angle (38, 40) selon l'une quelconque des revendications précédentes disposé dans un ou au niveau d'un ou de chacun desdits coins supérieurs (24, 26) de ladite partie de tissu (20), et
dans lequel il n'y a pas d'élément rigide allongé, tel qu'une ou plusieurs barre(s) rigide(s) allongée(s), le long d'un bord supérieur (70) de ladite partie de tissu (20).

6. Dispositif de protection de marchandises (14) selon la revendication 5, dans lequel ladite partie de tissu (20) comprend une garniture de bord (22), ladite garniture de bord (22) étant également pliable et/ou enroulable, ladite garniture de bord (22) étant formée en une partie et entourant au moins 50 %, de préférence au moins 70 %, mieux encore au moins 90 %, idéalement sensiblement la totalité d'une circonférence de ladite partie de tissu (20).

7. Dispositif de protection de marchandises (14) selon la revendication 6, dans lequel ladite garniture de bord pliable (22) comprend une courroie.

8. Dispositif de protection de marchandises (14) selon l'une quelconque des revendications 5 à 7, dans lequel ladite partie de tissu (20) comprend en outre une paroi de poche (62), ladite paroi de poche (62) formant une poche (76) de concert avec une partie de ladite partie de tissu (20).

9. Dispositif de protection de marchandises (14) selon la revendication 8, dans lequel ladite poche (76) est formée le long d'un bord (64) de ladite partie de tissu (20), de préférence ledit bord (64) étant destiné à être un bord inférieur, lorsque ledit dispositif de protection de marchandises (14) est monté dans un véhicule (12).

10. Dispositif de protection de marchandises (14) selon la revendication 8 ou 9, dans lequel ladite paroi de poche (62) présente un premier bord latéral long attaché audit bord (64) de ladite partie de tissu (20), un premier bord latéral attaché à une partie d'un premier bord latéral (66) de ladite partie de tissu (20), un second bord latéral attaché à une partie d'un second bord latéral (68) de ladite partie de tissu (20), et dans lequel un ou plusieurs moyens d'engagement (72a, 72b, 72c) est (sont) agencé (s) au niveau ou à proximité d'un second bord latéral long (73) de ladite paroi de poche (62) pour s'engager avec ladite partie de tissu (20), ledit/lesdits moyen(s) d'engagement (72a, 72b, 72c) comprenant par exemple un bouton et/ou un système auto-agrippant.

11. Dispositif de protection de marchandises (14) selon l'une quelconque des revendications 5 à 10, dans lequel ladite partie de tissu (20) présente deux coins supplémentaires (28, 30) destinés à être placés vers le bas lorsque ledit dispositif de protection de marchandises (14) est monté dans un véhicule (12), ledit dispositif de protection de marchandises (14) comprenant en outre au moins un moyen de connexion (78, 80; 84, 86) au niveau ou à proximité de chacun desdits coins supplémentaires (28, 30) pour la fixation audit intérieur (10) dudit véhicule (12).

12. Dispositif de protection de marchandises (14) selon la revendication 11, dans lequel ledit moyen de connexion (78, 80) comprend une courroie adaptée pour pour la fixation audit intérieur (10) dudit véhicule (12), lorsque ledit dispositif de protection de marchandises (14) est monté dans une position avant dans ledit véhicule (12), ladite courroie ayant de préférence une longueur réglable.

13. Dispositif de protection de marchandises (14) selon la revendication 11 ou 12, dans lequel ledit moyen de connexion (84, 86) comprend un crochet adapté pour la fixation audit intérieur (10) dudit véhicule (12), lorsque ledit dispositif de protection de marchandises (14) est monté dans une position arrière dans ledit véhicule (12).

14. Dispositif de protection de marchandises (14) selon l'une quelconque des revendications 11 à 13, dans lequel ledit moyen de connexion (78, 80; 84, 86) est élastique.

15. Véhicule (12) présentant un plafond au moins légèrement incurvé (36), ledit véhicule (12) comprenant un dispositif de protection de marchandises (14) selon l'une quelconque des revendications 5 à 14, qui est adapté pour épouser sensiblement la forme dudit plafond (36).

16. Procédé de fixation d'un dispositif de protection de marchandises (14) selon l'une quelconque des revendications 5 à 14 à un intérieur (10) d'un véhicule (12), ledit procédé comprenant les étapes suivantes:
- attacher chacun desdits deux coins supérieurs (24, 26) audit intérieur (10) dudit véhicule (12) à un plafond (36), ou à une partie supérieure respective d'une paroi latérale respective (62) dudit véhicule (12), au moyen desdits éléments d'angle (38, 40),
- tendre ledit dispositif de protection de marchandises (14) en appliquant une force de traction à une partie inférieure dudit dispositif de protection de marchandises (14), de préférence au niveau d'un bord inférieur (64) de ladite partie de tissu (20), mieux encore à ou à proximité d'un ou de chacun desdits coins supplémentaires (28, 30) de ladite partie de tissu (20), de telle sorte que ledit dispositif de protection de marchandises (14) épouse sensiblement la forme dudit plafond (36), et
- attacher lesdits coins supplémentaires (28, 30) audit intérieur (10) dudit véhicule (12).
